# EUROPEAN PATENT APPLICATION

(11) **EP 3 024 125 A1**
(43) Date of publication of application: **25.05.2016**
(21) Application number: 13889588.3
(22) Date of filing: 19.07.2013
(51) Int. Cl.: H02K 9/06, H02K 5/20, H02K 9/19

(54) **LIQUID-COOLED ELECTRIC MOTOR**

(71) Applicant: Kabushiki Kaisha Toshiba, Inc., Tokyo 105-8001 (JP)
(72) Inventor: ITOH, Akira, Tokyo 105-8001 (JP); KOYAMA, Taihei, Tokyo 105-8001 (JP); NODA, Shinichi, Tokyo 105-8001 (JP); MATSUSHITA, Makoto, Tokyo 105-8001 (JP); HASEBE, Toshio, Tokyo 105-8001 (JP); MAEDA, Yoshihiro, Tokyo 105-8001 (JP)
(74) Representative: Awapatent AB
(86) International application number: PCT/JP2013/069686
(87) International publication number: WO 2015/008390

(57) **Abstract**

According to an embodiment, a liquid cooled electric motor includes a case 11; a rotator 20 rotatably disposed in the case; a stator 30 including a cylindrical stator core opposed to an outer circumference of a rotator core of the rotator with a gap therebetween; a cooling portion 40 disposed in an annular manner to cover an outer circumference of the stator core and configured to allow a liquid coolant to flow therein; a first opening 42a and a second opening 42b formed in the case at respective both axial ends of the stator core with the stator core interposed therebetween; a ventilation duct 44 provided on an outer side of the case and configured to communicate the first opening and second opening; a rotator fan 46 mounted on the rotation shaft of the rotator and configured to circulate internal air via a through hole portion of the rotator core, the gap between the rotator core and the stator core and via the ventilation duct; a heat exchanger 50 provided in the ventilation duct and configured to cool down the internal air with a liquid coolant; and a cooling system configured to supply the liquid coolant to the cooling portion and the heat exchanger.

## Description

### Technical Field

Embodiments described herein relate to a liquid cooled electric motor and a railway vehicle comprising the same.

### Background Art

Conventionally, liquid cooled electric motors have been proposed, which cool down themselves by allowing a liquid coolant to flow through a liquid type cooling section disposed on an outer circumference of a stator. In electric motors of this type, heat generated by supplying electricity to the coil of the stator, and eddy current within the iron core is cooled down by propagating to the liquid type cooling section disposed on the outer circumference of the stator, mainly, through the stator core. Part of the heat from the stator is radiated once to an internal air of the electric motor and then propagated to the liquid type cooling section via an inner circumference of the frame or released to an outside air. In the case of an electric motor of the induction type, secondary conductor heat generation occurs in a rotator. Part of the heat is radiated to the internal air, and the rest is propagated to the frame by the heat propagation via a rotation shaft and the like, and radiated to the liquid cooling section and the outside air.

### Citation List

### Patent Literature

Patent Literature 1: Jpn. Pat. Appln. KOKAI Publication No. 8-237904

### Summary of Invention

### Technical Problem

However, when the amount of heat generation is increased as the output of the electric motor is enhanced, there are possibilities where the cooling performance is insufficient and the temperature of an insulating material of the stator coil or the like exceeds its withstanding temperature. In addition, even those members which do not generate heat by themselves (or have only a small amount of heat generation) increase their temperatures especially at sections which are easily influenced by the heat propagation from the heat generating members and the heat transfer from the internal air. In this case, there are chances where the temperatures of these sections exceed the withstanding temperature of, for example, a bearing lubricant.

The present invention has been made to solve the above problem, and its object is to provide a liquid cooled electric motor that can efficiently cool the heat whose amount has been increased as the output is enhanced.

### Solution to Problem

According to an embodiment, there is provided a liquid cooled electric motor comprising: a case;
a rotator comprising a rotation shaft extending in the case and rotatably supported to the case with a bearing, a rotator core secured to the rotation shaft, and a through hole portion extending through the rotator core in an axial direction; a stator comprising a cylindrical stator core opposed to an outer circumference of the rotator core with a gap therebetween, and a stator coil attached to the stator core; a cooling portion provided in an annular manner to cover an outer circumference of the stator core and configured to allow a liquid coolant to flow therein; a first opening and second opening formed in the case at respective both axial ends of the stator core; a ventilation duct provided on an outer side of the case and configured to communicate the first opening and second opening with each other; a rotator fan mounted on the rotation shaft to be rotatable with the rotation shaft, and configured to circulate internal air via the through hole portion of the rotator core, via the gap between the rotator core and the stator core and via the ventilation duct; a heat exchanger provided in the ventilation duct and configured to cool down the internal air with a liquid coolant; and a cooling system configured to supply the liquid coolant to the cooling portion and the heat exchanger.

### Brief Description of Drawings

FIG. 1 is a perspective view illustrating a liquid cooled electric motor according to a first embodiment;
FIG. 2 is a longitudinal sectional view illustrating the electric motor according to the first embodiment;
FIG. 3 is a perspective view illustrating a ventilating duct and a heat exchanger provided on an outer side of a case main body of the electric motor;
FIG. 4 is a cross sectional view illustrating the ventilating duct and the heat exchanger taken along the line A-A shown in FIG. 3;
FIG. 5 is a schematic view illustrating the flow of a liquid coolant in the electric motor;
FIG. 6 is a perspective view illustrating a liquid cooled electric motor according to a modified version;
FIG. 7 is a longitudinal sectional view illustrating a liquid cooled electric motor according to a second embodiment;
FIG. 8 is a longitudinal sectional view illustrating a liquid cooled electric motor according to a third embodiment;
FIG. 9 is a perspective view illustrating a liquid cooled electric motor according to a fourth embodiment;
FIG. 10 is a longitudinal sectional view illustrating a liquid cooled electric motor according to the fourth embodiment;
FIG. 11 is a schematic view illustrating the flow of a liquid coolant in the above-described electric motors;
FIG. 12 is a cross sectional view illustrating a railway vehicle comprising the liquid cooled electric motor according to a fifth embodiment;
FIG. 13 is a cross sectional view illustrating a railway vehicle comprising a liquid cooled electric motor according to a sixth embodiment;
FIG. 14 is a cross sectional view illustrating a railway vehicle comprising a liquid cooled electric motor according to a seventh embodiment; and
FIG. 15 is a cross sectional view illustrating an installation structure of the electric motors according to the fifth to seventh embodiments.

### Description of Embodiments

In the following, various embodiments of liquid cooled electric motors will be described with reference to the drawings. Throughout the description of embodiments, common structural members are designated by the same reference symbols, and the explanation therefor will not be repeated. Further, the drawings are schematic diagrams designed to assist the reader to understand the embodiments easily. Thus, there may be sections where the shape, dimensions, ratio, etc. are different from those of the actual devices, but they can be re-designed as needed with reference to the following explanations and publicly known techniques.

### (First Embodiment)

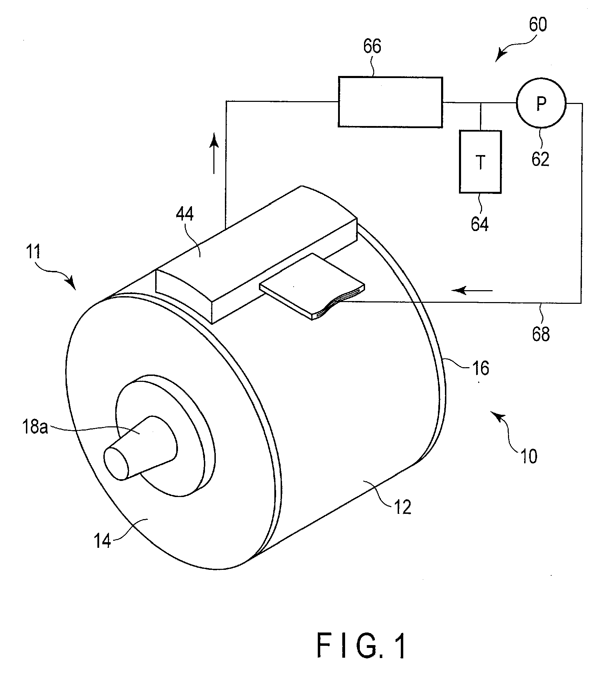

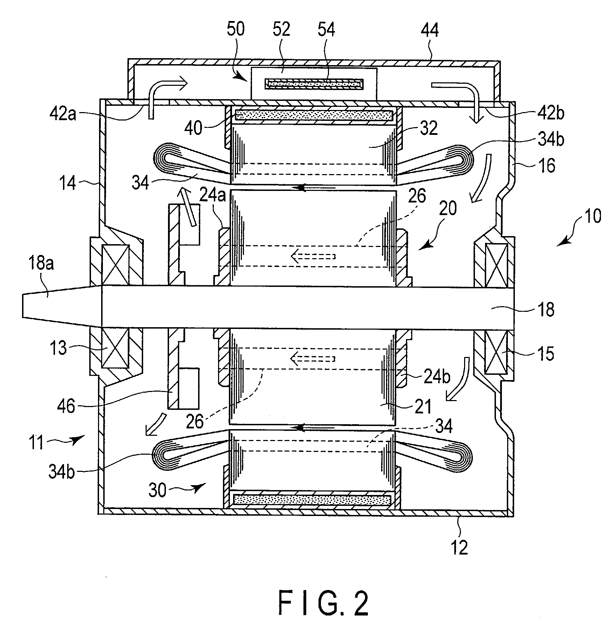

FIG. 1 is a perspective view illustrating a liquid cooled electric motor according to the first embodiment, and FIG. 2 is a longitudinal sectional view illustrating the liquid cooled electric motor according to the first embodiment.

As shown in FIGS. 1 and 2, a liquid cooled electric motor 10 comprises a case (outer frame) 11 of an enclosed type. The case 11 comprises, for example, a cylindrically shaped case main body (frame) 12, a first end wall 14 and a second end wall 16 which close both ends of the case main body 12. A first bearing 13 is embedded in a central portion of the first end wall 14. A second bearing 15 is embedded in a central portion of the second end wall 16.

In the case 11, a rotator 20, stator 30, cooling portion 40, rotator fans (air blowing fans) 46, etc. are housed. A rotation shaft 18 extends through the case 11. The rotator 20 comprises the rotation shaft 18 and a cylindrical rotator core 21 disposed coaxially at a central portion of the rotation shaft 18. Both axial ends of the rotation shaft 18 are rotatably supported by the first bearing 13 and the second bearing 15, respectively. With this structure, the rotation shaft 18 is coaxially stretched within the case 11. A drive-side end (output end) 18a of the rotation shaft 18 extends out to the motor, and outputs a drive force via a drive gear (not shown) or the like.

The rotator core 21 comprises a large number of annular metal plates made of a magnetic material such as of silicon steel plate and stacked one on another. The rotator core 21 is sandwiched from both side surfaces in an axial direction by a pair of core holders 24a and 24b set on the rotation shaft 18. The core holders 24a and 24b are formed in a ring shape. The inner circumferential portion of the rotator core 21 and the core holders 24a and 24b each comprise at least one, here, a plurality of ventilation holes (through hole portions) 26 pierced through the rotator core 21 in the axial direction.

The stator 30 comprises the cylindrical stator core 32. The stator core 32 is arranged to oppose the outer circumference of the rotator core 21 with a gap therebetween, and mounted to the inner circumferential surface of the case main body 12 via a cooling portion (explained later). The stator core 32 and the rotator core 21 are arranged coaxially with the case main body 12. The stator core 32 comprises a large number of annular metal plates made of a magnetic material such as of silicon steel plate and stacked one on another. The stator core 32 comprises in its inner circumferential portion a plurality of slots each extending in the axial direction and these slots are filled with stator coils 34, respectively. Coil ends 34b of the stator coils 34 are drawn out from both end surfaces of the stator core 32 in the axial direction. The stator core 32 and stator coils 34 constitute the stator 30.

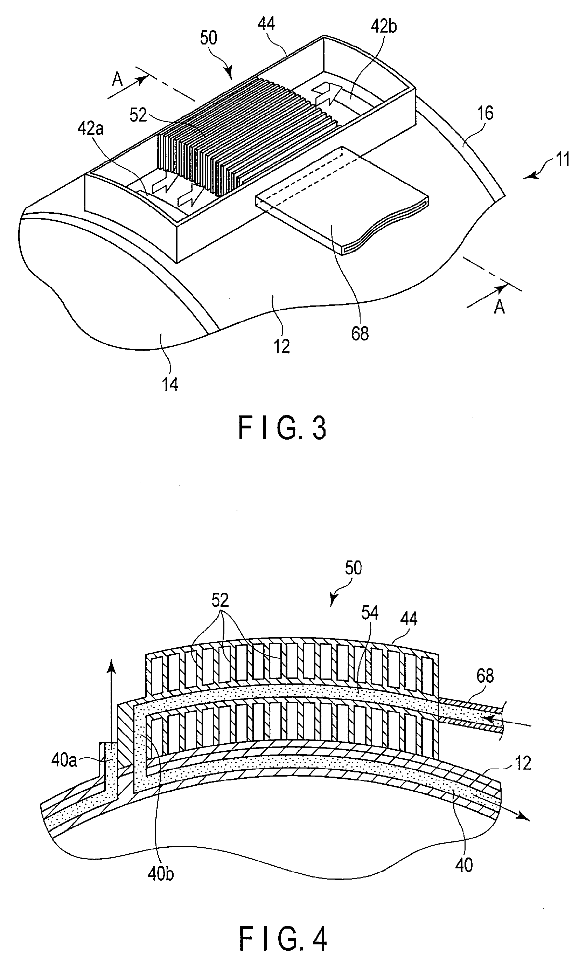

As shown in FIG. 2, an annular liquid cooling portion 40 is arranged to cover the outer circumference of the stator core 32. The cooling portion 40 comprises, for example, a flattened cylindrical hollow pipe, in which a coolant is allowed to flow. The liquid cooling portion 40 fits between the outer circumferential surface of the stator core 32 and the inner circumferential surface of the case main body 12. As shown in FIG. 4, a circumferential end 40a of the liquid cooling portion 40 extends out from the case main body 12. Another circumferential end 40b of the liquid cooling portion 40 extends out from the case main body 12 in the vicinity of the end 40a, and it communicates with a heat exchanger 50, which will be later explained.

FIG. 3 is a perspective view illustrating a ventilating duct and the heat exchanger provided on an outer side of the case main body, and FIG. 4 is a cross sectional view illustrating the ventilating duct and heat exchanger taken along the line A-A in FIG. 3.

As shown in FIGS. 2 to 4, the heat exchanger 50 is disposed in the ventilation duct 44, and serves to exchange heat between the internal air flow in the ventilation duct 44 and the liquid coolant flow. The heat exchanger 50 is of a type suitable for heat exchange between gas and liquid, for example, a finned tube. In this embodiment, the heat exchanger 50 comprises a plurality of plate-shaped fins 52 and a cooling pipe 54 extending to pierce through the ventilation duct 44 and the fins 52 and configured to allow a coolant to pass therethrough. The fins 52 are arranged to stand up on the outer circumferential surface of the case main body 12, and extend in the flow direction of the internal air, that is, the longitudinal direction of the ventilation duct 44. The cooling pipe 54 extends in the width direction of the ventilation duct 44, and penetrates the fins 52 in a direction perpendicular thereto. In this embodiment, a flow-out end of the cooling tube 54 communicates with the other end 40b of the liquid cooling portion 40. The other end 40b is connected to a liquid coolant circulation system (piping) 68, which will be described later.

As shown in FIG. 1 to FIG. 3, a first opening (flow-in opening) 42a and a second opening (flow-out opening) 42b are formed in the case main body 12. The first opening 42a and second opening 42b are provided respectively on both sides of the stator core 3 in its axial direction such as to interpose the stator core 3 therebetween. The ventilation duct 44 is disposed on the outer side of the case main body 12, that is, the outer circumferential surface thereof. The ventilation duct 44 extends in the axial direction of the case main body 12 to connect the first opening 42a to the second opening 42b.

As shown in FIG. 2, rotator fans 46 are set on the rotation shaft 18 such as to rotate integrally with the rotation shaft 18 in the case 11. In this embodiment, a radial type air blow fan is provided as the rotator fan 46 on the rotation shaft 18 at a location closer to the output end 18a thereof. As long as a desired air blowing performance is obtained, one or more rotator fans may be provided at an end opposite to the output end 18a, or at both ends respectively. In the meantime, the stator fans 46 may be of a different type such as the axial type, or a combination of those. As the rotator fan 46 rotates, the internal air is circulated within the case 11 through the ventilation holes 26 of the rotator core 21, the gap between the rotator core 21 and the stator core 32 and the ventilation duct 44.

As shown in FIG. 1, FIG. 3 and FIG. 4, the electric motor 10 comprises a cooling system 60 configured to flow a liquid coolant through the liquid cooling portion 40 and the cooling pipe 54 of the heat exchanger 50. The cooling system 60 comprises a liquid coolant circulating system 68 including a pump 62 provided outside the case 11, a reservoir tank 64, a heat radiator 66 and piping. In this embodiment, the liquid coolant circulating system 68 is connected by one end thereof, to the cooling pipe 54 of the heat exchanger 50, and the other end thereof is connected to one end 40a of the liquid cooling portion 40. The liquid coolant, for example, water, is supplied by the pump 62 to the heat exchanger 50 and the liquid cooling portion 40 via the liquid coolant circulating system 68, and circulated back to the pump 62 via the heat radiator 66. The heat exchanger 50 and liquid cooling portion 40 may be connected to each other in series or in parallel by piping. The reservoir tank 64 can be omitted.

The operation of the electric motor 10 configured as above will now be described.

As shown in FIG. 2, when the electric motor 10 is driven and the rotation shaft 18 is rotated, the rotator fan 46 secured on the shaft is rotated as well, thereby generating an internal air flow in the case 11. The internal air flow increases its temperature as it takes heat from the sections of the motor 10, for example, the stator coils 34. The internal air flow thus heated flows into the ventilation duct 44 from the first opening 42a to the heat exchanger 50. As shown in FIGS. 2 to 5, the internal air flowing around the fins 52 and the cooling liquid loaded into the cooling pipe 54 from the liquid coolant circulation system 68 flow along with each other in the heat exchanger 50. As the internal air flow passes around the cooling pipe 54 and the fins 52, the heat of the internal air flow is taken by the cooling pipe 54 and the fins 52, thus cooling down the internal air flow. The internal air flow thus cooled down is returned to the inside of the case 11 from the second opening 42b, and passes through the ventilation holes 26 of the rotator 20 and the gap between the rotator core 21 and the stator core 33 to take heat of the members repeatedly. In this manner, the internal air flow circulates in the case 11 as indicated by the arrow.

It should be noted that the internal air flow may be reversed in an opposite direction to that indicated by the arrow in FIG. 2 depending on the configuration of the rotator fans 46, but with this configuration as well, a cooling effect similar to that described above can be obtained.

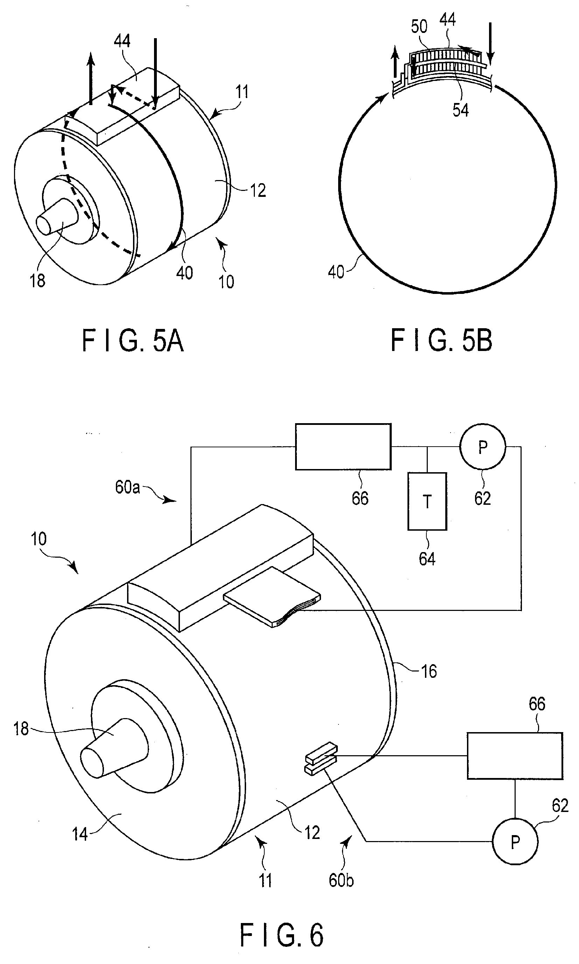

Further, as shown in FIGS. 5A and 5B, the liquid coolant passing through the heat exchanger 50 flows into the liquid cooling portion 40 from the other end 40b, and flows around the stator core 32 along the liquid cooling portion 40, thereby taking heat via the stator core 32 and case main body 12. Then, the liquid coolant is conveyed from one end 40a of the liquid cooling portion 40 through the liquid coolant circulating system 68 to the heat radiator 66. The heat taken by the liquid coolant flow is radiated to the outside air from the heat radiator 66. After that, the liquid coolant is again supplied to the heat exchanger 50 by the pump 62 and circulated in the heat exchanger 50 and the liquid cooling portion 40.

With the electric motor 10 configured as above, the internal air flowing in the ventilation duct 44 is cooled down by the heat exchanger 50 in addition to the cooling operation by the liquid cooling portion 40, and then the internal air thus cooled down is conveyed into the case 11 to cool down the members therein. Therefore, it is possible to achieve an electric motor with a high cooling effect as a whole. Moreover, since the internal air flow is cooled to a low temperature, the increase in temperature can be suppressed in the sections which do not generate heat by themselves but are affected solely by heat propagation and heat transfer from the internal air flow, that is, for example, the case 11 and the first and second bearings 13 and 15.

Note that the first embodiment described above is configured to supply the liquid coolant to the heat exchanger 50 and liquid cooling portion 40 with the common cooling system 60, but is not limited to this configuration. It is alternatively possible that, for example, a first cooling system configured to supply a liquid coolant to the heat exchanger and a second cooling system configured to supply a liquid coolant to the liquid cooling portion 40 are provided separately as can be seen in FIG. 6. In this case, the cooling pipe of the heat exchanger and the liquid cooling portion do not communicate with each other, but are connected to their respective cooling systems separately. Further, the cooling pipe 54 in the heat exchanger 50 is not limited to one flat cooling pipe, but there may be a plurality of cooling pipes separated from each other. Alternatively, the cooling pipe is not limited to a straight shape, but may be of an accordion type which extends in through the fins.

Next, liquid cooling type electric motors of other embodiments will be described.

In the following embodiments, identical structural members to those of the first embodiment will be designated by the same reference symbols, and the explanation therefor will not be repeated. In the following descriptions, different portions will be mainly described in detail.

### (Second Embodiment)

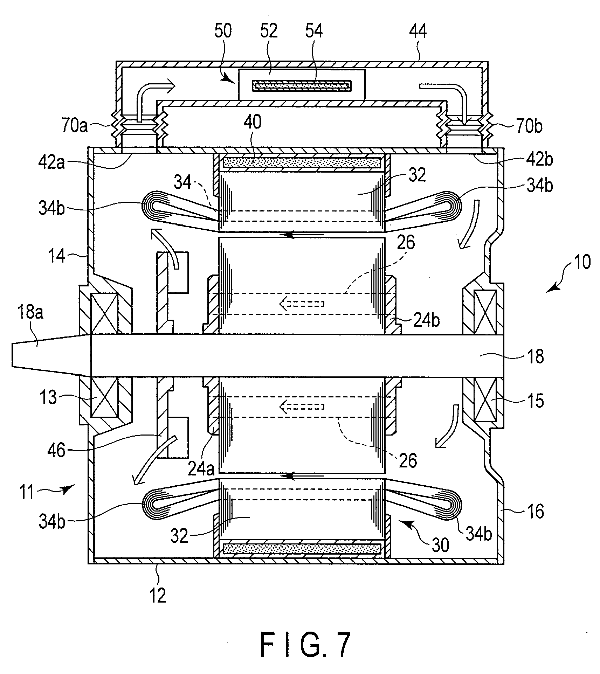

FIG. 7 is a longitudinal sectional view illustrating a liquid cooled motor according to the second embodiment. As shown in this figure, according to the second embodiment, a ventilation duct 44 is located at a position distant from a case 11, and connected to a first opening 42a and second opening 42b of a case main body 12 through connection ducts 70a and 70b. The ventilation duct 44 is disposed to be substantially in parallel with the outer circumferential surface of the case main body 12 and in the axial direction of the case main body. Further, a heat exchanger 50 is placed in the ventilation duct 44.

The connection ducts 70a and 70b, for example have an accordion structure or are made of a rubber material. It is desirable that the connection ducts 70a and 70b are flexible and of such a structure or material that can absorb the relative displacement between the ventilation duct 44 and the case 11. Meanwhile, in the case where a cooling pipe 54 of the heat exchanger 50 and a liquid cooling portion 40 in the case 11 are connected to each other by piping, it is desirable that the connecting portion (not shown) of the piping should be of such a structure can absorb the relative displacement, that is, for example, an accordion structure.

In the second embodiment, the other configuration of the electric motor 10 is identical to that of the first embodiment.

The electric motor 10 according to the second embodiment has a cooling effect identical to that of the first embodiment.

With the second embodiment configured as described above, the heat exchanger 50 and ventilation duct 44, and the case 11 of the electric motor 10 can be installed separately in two sections which have a relative difference in oscillation or motion, that is, for example, a truck and vehicle body of a railway vehicle. Let us take an example of the railway vehicle now. Here, the truck oscillates severely while the vehicle is running. Therefore, if the oscillation applied from the truck to the electric motor 10 propagates directly to the heat exchanger 50, the heat exchanger 50 may be damaged due to lack of mechanical strength. As measures to avoid this, it is an option to place the heat exchanger 50 and ventilation duct 44 in the vehicle body, which is relatively less oscillated, or on an anti-oscillation device, for example. However, in this case, where the heat exchanger 50 and ventilation duct 44 and the electric motor 10 are placed in separate sections, the ventilation duct 44 may be damaged due to the relative difference in oscillation or motion.

According to the second embodiment, the relative difference in oscillation or motion occurring between the electric motor 10 and the heat exchanger 50 or ventilation duct 44 is absorbed by the connection ducts 70a and 70b, and thus the oscillation or motion do not propagate to each other. Further, under such circumstances, the flow of the internal air or liquid coolant (not shown) in the electric motor is not disturbed.

The other operational effects obtainable with the second embodiment are identical to those of the first embodiment.

### (Third Embodiment)

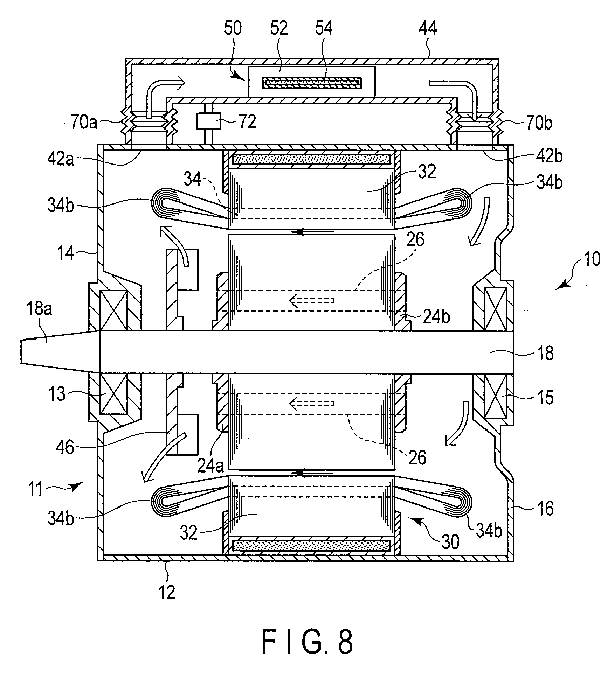

FIG. 8 is a longitudinal sectional view illustrating a liquid cooled motor according to the third embodiment. As shown in this figure, the basic configuration of the electric motor 10 is identical to that of the second embodiment described above. According to the third embodiment, a ventilation duct 44 is supported on a case 11 by a supporting member 72 comprising an anti-oscillation function. In other words, the supporting member 72 is provided between the ventilation duct 44 and the case 11 of the electric motor 10. The supporting member 72 comprises, for example, a spring or dumper. Further, as in this embodiment, the supporting member may be a separate part, or may be integrated with at least one of connection ducts 70a and 70b.

The other operational effects obtainable with the third embodiment as well are identical to those of the second embodiment. Further, the third embodiment is suitable for the cases where a large oscillation is applied to the electric motor 10, but there are no other separate less oscillated sections where the heat exchanger 50 and ventilation duct 44 should be placed.

With the third embodiment, even in the case where excessive oscillation is applied to the electric motor, the supporting member 72 attenuate the oscillation before it is propagated to the ventilation duct 44. Thus, such large oscillation which can cause damage is not applied to the heat exchanger 50. In this manner, an electric motor with excellent cooling performance and reliability can be obtained.

### (Fourth Embodiment)

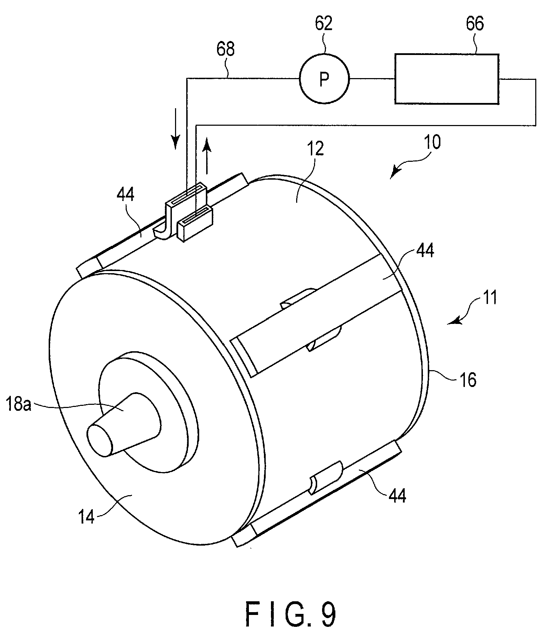

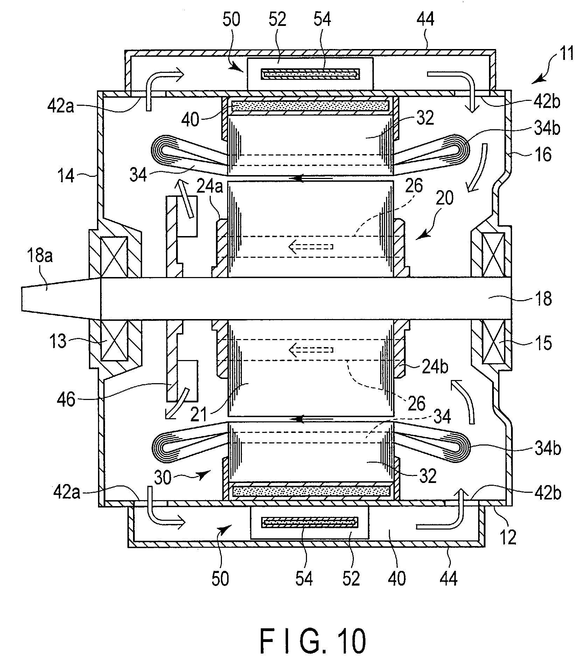

FIG. 9 is a perspective view illustrating a liquid cooled motor according to the fourth embodiment, and FIG. 10 is a longitudinal sectional view illustrating the liquid cooled motor of the fourth embodiment. In these figures, identical structural members to those of the first, second or third embodiment will be designated by the same reference symbols, and the explanation therefor will not be repeated.

According to the fourth embodiment, not one pair but a plurality of pairs of a first opening 42a and second opening 42b are formed in a case main body 12 of a case 11 of an electric motor 10. Each pair of the first opening 42a and second opening 42b are connected to each other linearly by a ventilation duct 44 while interposing a stator core 32. That is, a plurality of, for example, four ventilation ducts 44 are disposed on the outer circumferential side of the case main body 12 at predetermined intervals in the circumferential direction. Each of the ventilation ducts 44 extends in the axial direction of the case main body 12. Further, a heat exchanger 50 is set in each of the ventilation ducts 44.

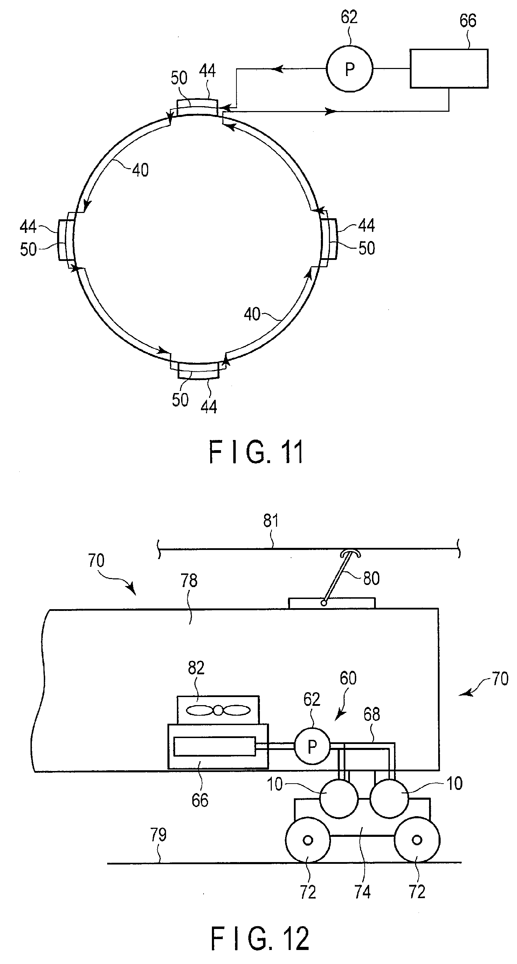

As shown in FIGS. 9 and 11, a liquid coolant circulation system 68 comprising pipes of a cooling system 60 is connected to a cooling pipe 54 of each of the heat exchangers 50 sequentially, and then connected to each of liquid cooling portions 40. A liquid coolant, for example, water is supplied by a pump 62 to the four heat exchangers 50 and liquid cooling portions 40 via the liquid coolant circulation system 68. After that, the coolant is circulated to the pump 62 via a heat radiator 66. Note that each heat exchanger 50 and liquid cooling portion 40 may be connected in series or in parallel by respective piping.

In FIG. 9, the four heat exchangers 50 are arranged at equal intervals as one example, but the number of exchanges or how to arrange them may be changed in accordance with the design of the actual device. Further, each ventilation duct 44 is disposed on the case 11 in the axial direction, but it is alternatively possible that one or more or all of the ventilation ducts are disposed as in the case of the second or third embodiment.

In the fourth embodiment, the other configuration of the electric motor 10 is identical to that of the first, second or third embodiment.

According to the electric motor 10 configured as above, an internal air flow generated by the rotation of rotator fans 46 is distributed dividedly to a plurality of the first openings 42a located on one side with respect to the stator core 32, and is allowed to pass through each of the ventilation ducts 44, to return to the inside of the case 11 from the second openings 42b on the other side, thus completing a circulation. In FIG. 10, for the sake of simplicity, arrows indicate such that the internal air flow is divided into upper and lower sides of the rotation shaft 18, but in reality, the divided flows are mixed with each other inside the case 11. The other effects obtainable with the electric motor 10 of the fourth embodiment are identical to those of the first embodiment.

An effect unique to the fourth embodiment will now be described.

Let us take here the case of the first embodiment shown in FIG. 1 as an example. In this case, the coil end section of the stator coil 34 is well cooled down since it is located near the respective second opening 42b, and therefore exposed directly to the internal air flow cooled down after allowed to pass the respective heat exchanger 50. Thus, there is a difference in temperature created between the coil end portion and another coil end portion located on the opposite side with respect to the rotation shaft 18. In the case where the difference in temperature is large, and further the cooling design is made to lower the temperature of the coil end on the first opening 42a side of the stator coil 34, the performance becomes excessive for the coil end on the other end.

According to the fourth embodiment, the internal air flow is divided into a plurality of the second openings 42b, and therefore the temperature difference between the coil end portions can be lessened. The other operational effects obtainable with the fourth embodiment are identical to those of the first, second or third embodiment.

Next, an embodiment where the above-described electric motor 10 is applied to a railway vehicle will now be described.

### (Fifth Embodiment)

FIG. 12 is a cross sectional view schematically showing a railway vehicle according to the fifth embodiment. As shown in this figure, a railway vehicle 70 comprises two trucks 74 (only one is shown) each comprising wheels 72, and a vehicle main body 78 supported on the trucks 74 via air springs 76. A liquid cooled electric motor 10, which functions as a main traction motor, is mounted in the vicinity of each of the wheels 72 on each truck 74. Each electric motor 10 is configured to be similar to the electric motor 10 of one of the first to fourth embodiments described above. Each electric motor 10 comprises a rotation shaft 18 with an output end 18a, which is connected to each respective wheel 72 such that rotational force can be transmitted thereto via coupling and gear boxes (not shown). The wheels 72 are engaged on respective rails 79.

The vehicle main body 78 comprises, on its ceiling side, a pantograph 80, which is brought into contact with an overhead wiring line 81. Power supplied to the pantograph 57 from the wiring line 58 is then fed to a power converter device and control device (not shown). The power is converted from direct current to alternate current by the power converter device and then supplied to each of the electric motors 10 via wired lines (not shown). Each motor 10 is driven with the power supplied, and rotates the wheels 72 via the coupling and gear boxes. Thus, the railway vehicle 70 runs on the rails 79.

The vehicle main body 78 comprises, within itself, a pump 62, a heat radiator 66, cooling fans 82 configured to supply cooling air blow to the heat radiator. A liquid coolant circulation system 68, which comprises piping, is connected to two of the electric motors 10 via the heat radiator 66 and pump 62. A liquid coolant is supplied to a heat exchanger 50 and liquid cooling portion 40 of each motor 10 by the pump 62 and then returned through the liquid coolant circulation system 68 to the pump 62 as one circulation. Note that each heat exchanger 50 and liquid cooling portion 40 may be connected in series or in parallel by respective piping.

According to the railway vehicle 70 configured as described above, a cooling system 60 of the electric motors 10 is installed within the railway vehicle 70, and thus the liquid coolant can be supplied efficiently to the electric motors 10. Further, as to the motors 10, a high cooling effect can be obtained as a whole as in the cases of the embodiments described above.

### (Sixth Embodiment)

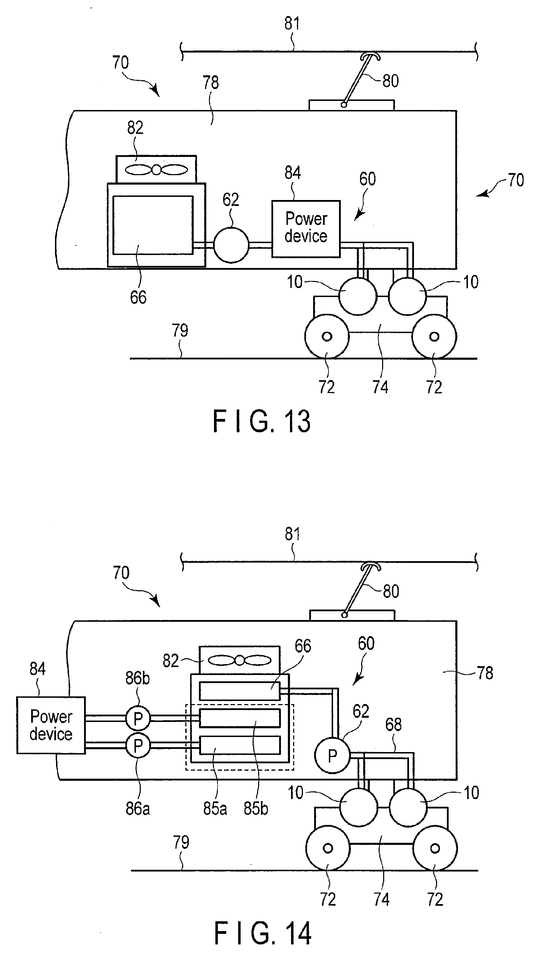

FIG. 13 is a cross sectional view schematically showing a railway vehicle according to the sixth embodiment. As shown in FIG. 13, according to this embodiment, a power device 84 such as a power conversion device is installed on a floor in a vehicle main body 78. The power device 84 is connected to a liquid coolant circulation system 68 of a cooling system 60 between a pump 62 and an electric motor 10. The rest of the configuration of a railway vehicle 70 is identical to that of the fifth embodiment described above.

According to the railway vehicle 70 of this embodiment, the motors 10 and the power conversion device 84 can share the cooling system. In addition, the other operational effects obtainable as well with the sixth embodiment are identical to those of the fifth embodiment described above.

### (Seventh Embodiment)

FIG. 14 is a cross sectional view schematically showing a railway vehicle according to the fifth embodiment. As shown in FIG. 14, according to this embodiment, a power device 84 such as a power conversion device is installed on a floor in a vehicle main body 78. Further, two heat radiators 85a and 85b for the power device 84 are disposed in line with a heat radiator 66. The heat radiators 66, 85a and 85b are arranged to be exposed to cooling air blow from common cooling fans 82. Further, the heat radiators 85a and 85b are connected to the power device 84 via pumps 86a and 86b, respectively. As the pumps 86a and 86b are operated, a liquid coolant for cooling is supplied to the power device 84 to cool down the power device. The liquid coolant which took heat from the power device 84 is circulated to the heat radiators 85a and 85b to cool them down by radiation. The rest of the configuration of a railway vehicle 70 is identical to that of the fifth embodiment described above.

According to the railway vehicle 70 of this embodiment, the heat radiator 66 in the cooling system for the motors 10 and the heat radiators 85a and 85b in the cooling system for the power conversion device 84 can share the common cooling fans 82 for heat radiation. In addition, the other operational effects obtainable as well with the seventh embodiment are identical to those of the fifth embodiment described above.

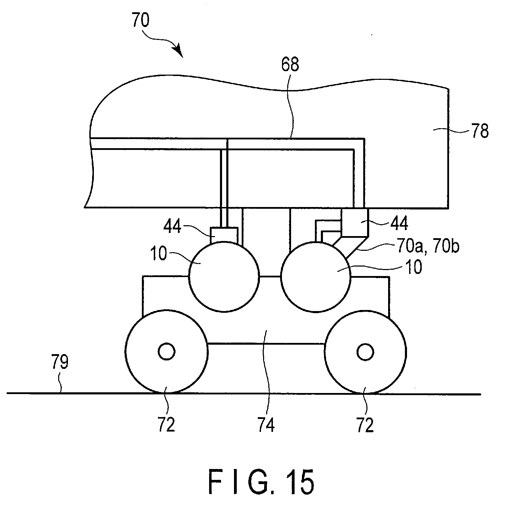

In the case where the motor described in the first embodiment is used in the fifth to seventh embodiments described above as the electric motors 10, the ventilation ducts 44 are placed on the track 74 together with the cases of the motors, and the liquid coolant circulation system (piping) 68 of the cooling system is put through the floor of the vehicle main body 78 to be connected to the heat exchangers in the ventilation ducts 44, as shown in FIG. 15. Meanwhile, in the case where the motor described in the second embodiment is used in the fifth to seventh embodiments described above as the electric motors 10, as shown in FIG. 15, the ventilation ducts 44 are installed underneath the floor of the vehicle main body 78 and connected to the respective cases of the motors 10 via connection ducts 70a and 70b. Further, the liquid coolant circulation system (piping) 68 of the cooling system is put through the floor of the vehicle main body 78 to be connected to the heat exchangers in the ventilation ducts 44, and further to the liquid cooling portions 40 in the cases from the heat exchangers.

The present invention is not limited to the foregoing embodiments as it is, and it can be carried out by modifying constituent elements without departing from the scope of the essence of the embodying stage. Additionally, constituent elements disclosed in the foregoing embodiments can be appropriately combined to form various inventions. For example, some constituent elements may be eliminated from all the constituent elements disclosed in the embodiments. Further, constituent elements in different embodiments can be appropriately combined.

## Claims

1. A liquid cooled electric motor comprising:
a case;
a rotator comprising a rotation shaft extending in the case and rotatably supported to the case with a bearing, a rotator core secured to the rotation shaft, and a through hole portion extending through the rotator core in an axial direction;
a stator comprising a cylindrical stator core opposed to an outer circumference of the rotator core with a gap therebetween, and a stator coil on the stator core;
a cooling portion provided in an annular manner to cover an outer circumference of the stator core and configured to allow a liquid coolant to flow therein;
a first opening and second opening formed in the case at respective both axial ends of the stator core; a ventilation duct provided on an outer side of the case and configured to communicate the first opening and second opening with each other;
a rotator fan mounted on the rotation shaft to be rotatable with the rotation shaft, and configured to circulate internal air via the through hole portion of the rotator core, the gap between the rotator core and the stator core and via the ventilation duct;
a heat exchanger provided in the ventilation duct and configured to cool down the internal air with a liquid coolant; and
a cooling system configured to supply the liquid coolant to the cooling portion and the heat exchanger.

2. The liquid cooled electric motor of claim 1, wherein the ventilation duct is provided on an outer surface of the case.

3. The liquid cooled electric motor of claim 1, wherein the ventilation duct is provided distant from the case and the first and second openings of the case are connected to the ventilation duct with a connection duct having flexibility.

4. The liquid cooled electric motor of claim 3, further comprising an anti-oscillation supporting member configured to support the ventilation duct on the case.

5. The liquid cooled electric motor of any one of claims 1 to 4, wherein the heat exchanger comprises a plurality of fins disposed within the ventilation duct and a cooling pipe extending through the fins and configured to allow the liquid coolant supplied from the cooling system to flow therein.

6. The liquid cooled electric motor of any one of claims 1 to 4, wherein the case comprises a plurality of pairs of first openings and second openings, a plurality of ventilation ducts each configured to connect each respective pair of the first opening and the second opening to each other, and a heat exchanger provided in each of the ventilation ducts and configured to cool down the internal air with the liquid coolant.

7. A railway vehicle comprising:
a vehicle main body;
a truck comprising wheels mounted thereto and configured to support the vehicle main body;
a liquid cooled electric motor of any one of claims 1 to 4, provided on the track and configured to drive the wheels; and
a cooling system for the liquid cooled electric motor, provided in the vehicle main body and configured to supply a liquid coolant to the cooling portion and the heat exchanger of the electric motor.

8. The railway vehicle of claim 7, further comprising a power device provided in the vehicle main body and connected to the cooling system.

9. The railway vehicle of claim 7, further comprising a power device provided in the vehicle main body; and a cooling system for the power device, provided in the vehicle main body and configured to cool down the power device, the cooling system for the electric motor and the cooling system for the power device each comprising a heat radiator provided in the vehicle main body and a common air blower configured to blow cool air to each heat radiator.

10. The railway vehicle of claim 7, wherein the ventilation duct of the electric motor is mounted on the vehicle main body and connected to the case of the electric motor via a connection duct.

11. The railway vehicle of any one of claims 8 to 10, wherein the heat exchanger comprises a plurality of fins disposed within the ventilation duct and a cooling pipe extending through the heat radiating fins and configured to allow the liquid coolant supplied from the cooling system to flow therein.
